# EUROPEAN PATENT SPECIFICATION

(11) **EP 0 595 215 B1**
(45) Date of publication and mention of the grant of the patent: **18.06.1997**
(21) Application number: 93117129.2
(22) Date of filing: 22.10.1993
(51) Int. Cl.: H04N 7/167

(54) **Method and system for the encryption of a video picture**
Vorrichtung und Verfahren zur Verschlüsselung eines Videobildes
Procédé et appareil pour le chiffrage d'une image vidéo

(30) Priority: 30.10.1992 FI 924940
(43) Date of publication of application: 04.05.1994
(73) Proprietor: NOKIA TECHNOLOGY GmbH, 75175 Pforzheim (DE)
(72) Inventor: Heikkinen, Ari, SF-24260 Salo (FI); Kangas, Mauri, SF-21530 Paimio (FI); Raussi, Juha, SF-24280 Salo (FI); Hiltunen, Reino, SF-24280 Salo (FI)

(56) References cited:
- WO-A-91/13517
- WO-A-91/14341

## Description

The present invention relates to an encryption method and a system to encrypt a video picture, in which the lines of a field or of a picture are shuffled in an encoder before transmission in order to encrypt the picture, and in which in a section of the field or of the picture lines are shuffled within a predetermined encryption block, whereas the rest of the field or of the picture remains unchanged.

In the encryption methods based on changing the order of the lines usually the whole picture area is shuffled in smaller blocks, whereby the block to be shuffled slides over the whole picture area. The picture is shuffled block by block, because the shuffling requires a memory, in which the lines are stored during the processing, and because the high number of lines would require a very large and expensive memory in order to shuffle the whole picture area at the same time. The size of the block used for the shuffling is small when compared to the whole picture, e.g. 32 lines, when the television picture comprises 625 lines (the fields contain 313 and 312 lines).

Two memories in parallel can be used to store the lines in the memory and to read from the memory the information to be dis-played, whereby writing into memory during a certain picture block is made into one memory and simultaneously information is read from the other memory. Separate memory circuits can be used for the write and read operations both in the encoder and in the decoder. A disadvantage of the solution with two memories is that often the size of the area to be encrypted must be limited, due to the price of the memories and the need for two memories.

Another alternative is to use very fast memories, whereby there is time to read the video signal from the memory and simultaneously to write into the same memory, and thus only one memory is required instead of two parallel memories. The cost is also a disadvantage when a fast memory is used, because the price of a fast memory is manifold compared to a dynamic memory.

An example of the use of a dynamic block size is known from the patent application WO 91/13517 (= WO-A-9113 517), in which the decoder uses a certain algorithm to generate the line memory addresses (address algorithm), whereby the encoder must shuffle the lines into such an order, that the decoder is able to restore them into the original order by using the address algorithm. Thus the lines must not be shuffled into an arbitrary order without losing the advantages provided by a simple decoder structure. A straight-forward address algorithm used by the decoder requires the lines to be shuffled in the encoder in a certain way, so that the decoder is able to restore them. The decoder will not know the order of the lines, but it operates directly on the basis of its address algorithm. When the transmitting end arranges the lines into such an order that the device at the receiving end directly controls the memory addresses according to the address algorithm, then a fairly simple receiver structure is obtained, and the required amount of memory in the receiver can be reduced to half (or one) of the prior memory embodiment. It was possible to reduce the amount of memory because both the read and write operations use a common memory. The disadvantage of this system is that it is cumbersome to obtain the desired line order, i.e. the advantages of the method providing a simple structure of the decoder are lost, if an arbitrary line order is desired.

The object of the present invention is to present a method for the encryption of a video picture, which in a simple way realizes the encryption of the video picture, and with which thus also the encryption system is simple to realize and economical to manufacture. In the method according to the present invention the encryption is realized so that the decoder used for the decryption can be realized using only one memory, which not necessarily has to be a fast memory, and it is sufficient to store in it a section of the whole television picture or field.

The video picture encryption method according to the invention is set out in claim 1.

An encoder and a decoder of an encryption system for a video picture is set out in claim 6 and 8.

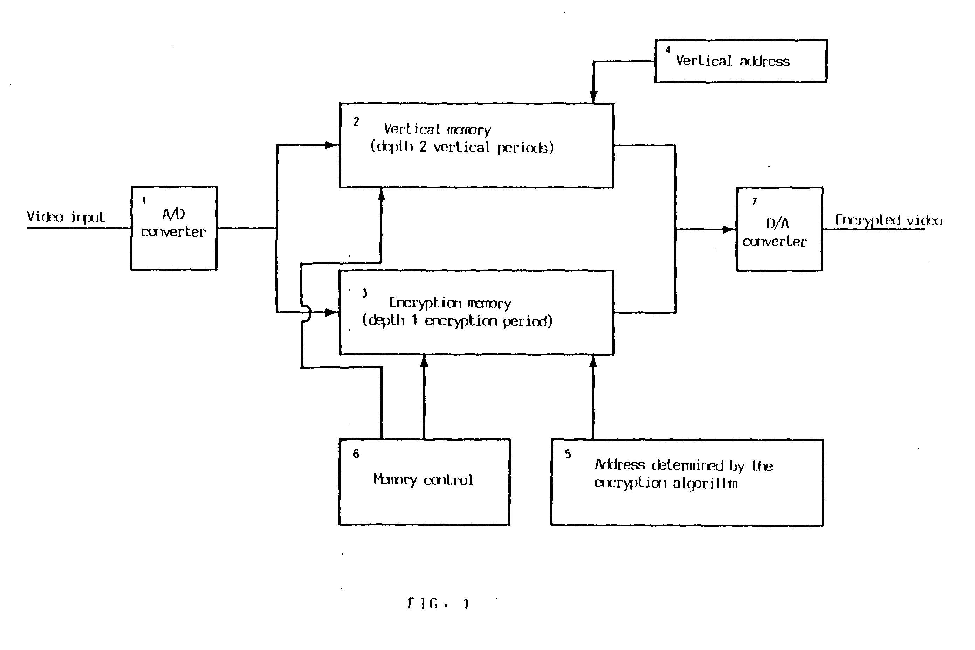

The invention is now described with reference to the enclosed figures, in which figure 1 shows the block diagram of the encryption encoder according to the invention;
figure 2 shows the block diagram of the encryption decoder according to the invention;
figure 3 shows how the contents of the encryption and vertical memory is transferred from the encoder to the decoder in a system according to the invention; and
figure 4 shows the processing of the picture blocks in the encoder and in the decoder in the method according to the invention.

Lines are transmitted in blocks, both in the original order and in a changed order. Special arrangements are required at the interface where we proceed to transmit the lines in the changed order, or where we proceed from the line block area to be transmitted in the changed order to transmit lines in the original order. For the interface in question a so called transition block is required. It is essential that the transition block does not belong to the algorithm, which determines the line order in the changed order.

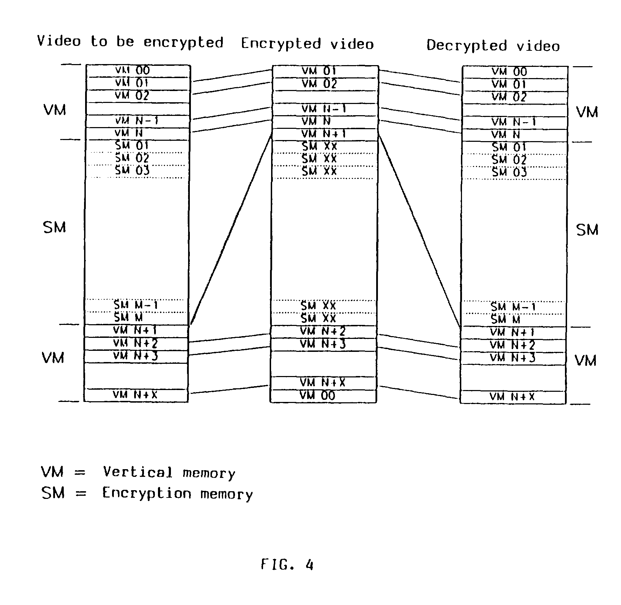

In the encoder the block to be encrypted is delayed by one field. The delay is required so that according to the algorithm the contents of the block can be changed into a changed order during the subsequent field. The vertical block comprising a section of the picture or of the field to be kept in the original order, and the vertical blanking period, or the vertical (VBI, Vertical blanking interval), is delayed by two fields. A transition block is required at the interface where we proceed to transmit the lines in the changed order. The transition block is formed, after the interface, by the first sub-block N+1 (the video to be encrypted) transmitted in the original order, following the block SM (figure 4) transmitted in the changed order. The sub-block can comprise a single line, or a few lines, or several lines as well.

Figure 1 shows the video picture encoder of the system according to the invention, and below we consider the video signal processing in the encoder. The standardized signal (PAL or NTSC) to be processed is supplied to the A/D converter 1, from which the digitized video signal is stored into the vertical memory 2 during the vertical period (whereby the section VM, or the vertical (VBI), external of the encryption area SM of one field, and the lines to be transmitted in the original order are stored) and into the encryption memory 3 during the encryption period (i.e. the section to be encrypted is stored). By the encryption period here is meant that time, during which the video signal's section to be encrypted is processed. Reading and writing of the vertical and encryption memory at the addressed memory location is carried out simultaneously. The addresses of the vertical memory 2 are generated by the counter 4, having a modulo, which is two times the length of the vertical period. The counter 4 is advanced at each line. This arrangement delays the vertical period by two fields. Further the address of the vertical memory 2 is increased by one during every second field (when the modulo is filled), whereby the first sub-block N+1 (the video to be encrypted), transmitted in the original order after the interface following the block SM transmitted in the changed order, is transferred in the encoder to be the last sub-block of the block VM transmitted in the original order preceding the block SM transmitted in the changed order (figure 4, video to be encrypted - the encrypted video). The addresses of the encryption memory 3 are generated by the encryption algorithm 5. The vertical and encryption memories 5,6 are controlled by the memory control logic 6. Finally the encrypted digitized video signal is converted into an analog signal by the D/A converter 7, having the encrypted video signal as its output.

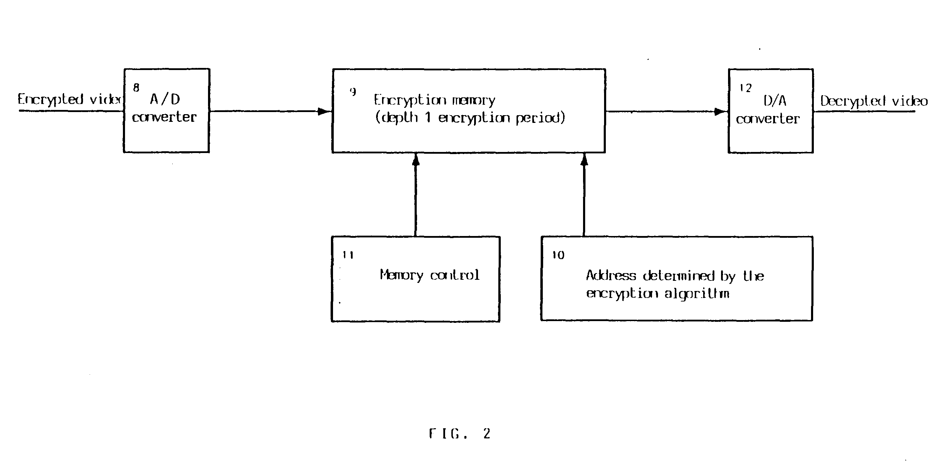

Figure 2 shows the video picture encryption decoder of the system according to the invention, and below we consider the processing of the encrypted video signal in the decoder. The block SM transmitted in the changed order is delayed by one field. The delay is required so that during the next field the contents of the block can be restored according to the algorithm into its original order. The vertical and the block VM transmitted in the original order are not delayed. The transition block is formed from the last sub-block N+1 (encrypted video, figure 4) transmitted in the original order of the interface preceding the block transmitted in the changed order.

The encrypted video signal is supplied to the A/D converter 8, from which the digitized video is stored into the encryption memory 9. The addresses of the encryption memory are generated by the encryption algorithm 10. The address 00(H), which is not allowed to the encryption algorithm, is reserved for the processing of the vertical period, and the above mentioned transition block N+1 used in the decoder is transferred to be the first sub-block (encrypted video - decrypted video) after the block transmitted in the original order after the interface following the block SM transmitted in the changed order. Then the vertical block VM, which was forwarded in time compared to the encryption block SM, is returned to its position, and the video picture with the original order is obtained. The encryption memory 9 is controlled by the memory control logic 11. The decrypted video signal is obtained from the D/A converter 12.

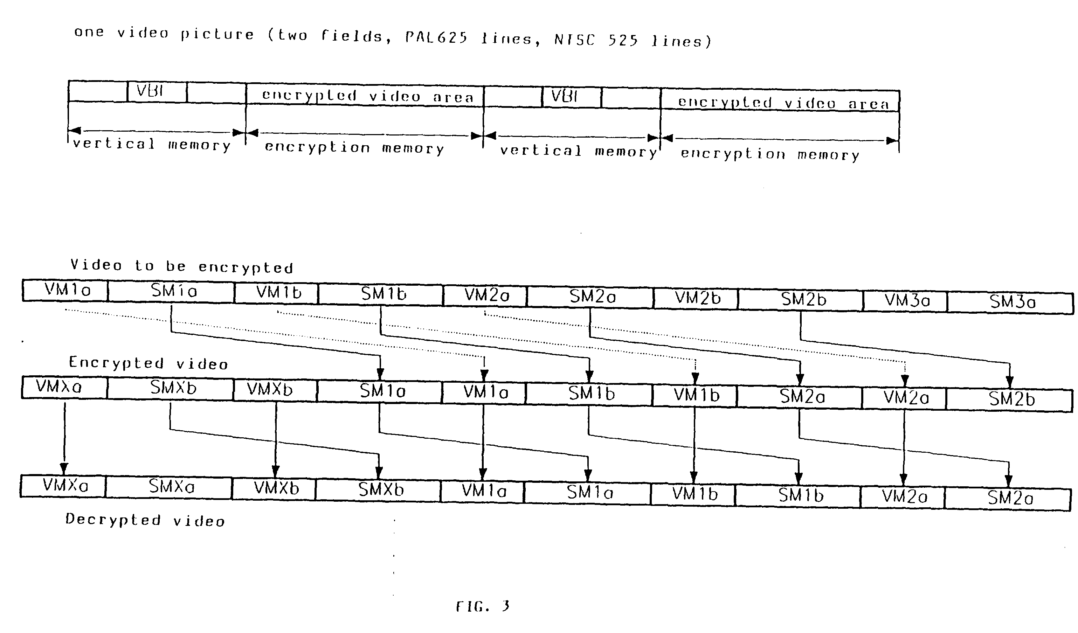

Figure 3 shows the transfer of the encryption and vertical blocks from the encoder to the decoder. In the encoder the length of the vertical memory is 2 vertical blocks (i.e. VM1a + VM1b), whereby the encrypted video vertical blocks VM1a and VM1b stored in the memory are delayed by 2 vertical blocks or 2 fields. The length of the encryption block is the length of the block SM between the two vertical blocks VM1a, VM1b, whereby the encryption block SM1a, SM1b, SM2a, SM2b, etc. of the encrypted video signal stored in the memory is transferred to a location after the original location of the next vertical block VM1b, VM2a, VM2b, VM3a, etc. As is shown in figure 3, for example the encryption block SM1a is transferred to a location in the encrypted video signal, where the vertical block VM1b after the encryption block SM1a was located in the video signal to be encrypted. In the decoder the vertical block VM is stored as e.g. sub-blocks having the length of only one video line, which causes a delay of one sub-block (video line) to the vertical block (cf. figure 4). The whole encryption block SM is stored for the decryption, so that the decrypted encrypted blocks SM1a, SM1b, SM2a, etc. are moved so that they start after the next vertical block VM1a, VM1b, VM2a, etc. (the delay is thus one field). Thus the order of the video signal supplied to the encoder corresponds to the order of the vertical and encryption blocks of the video signal decrypted by the decoder. The video signal decrypted by the video signal processing according to the invention is delayed by one picture or two fields VMxa + SMXa and VMXb + SMXb compared to the original video signal to be encrypted.

Figure 4 shows the block transitions in the encoder and in the decoder at the interfaces of the blocks transmitted in the changed order SM and in the original order VM. In the encoder the reading of the encrypted video signal from the memory is started at the address VM 01 (encrypted video) following the start address VM 00 (video to be encrypted) used for the writing into the memory. With this operation the vertical block VM of the encrypted video signal is forwarded in time compared to the encryption block SM by the amount of a sub-block between two memory addresses (which can comprise e.g. one or more video lines). In the decoder this forwarding in time is restored when the vertical block VM is stored in sub-blocks of the size of the forwarded block into memory locations (e.g. the address 00(H)) not allowed for the encryption algorithm.

In the encoder the first block N+1 of the transmitted block VM following the encryption block SM transmitted in the changed order is transferred (shifted forward in time) to be the last sub-block N+1 or the transition block of the block VM transmitted in the changed order of the encrypted video signal. In the decoder the transition block N+1 is returned to its own place due to the processing in the memory.

With the method and the system according to the invention it is possible to encrypt a video picture in a simple and reliable way, and the encryption can be decrypted in a decoder using only one memory. The method and the system according to the invention is not limited to the examples shown here, but can be modified within the scope of the claims; thus it is possible to apply the encryption method to the field or to the picture, and it is not necessary to use the order of the different blocks SM, VM in the examples.

Further it is possible to use a so called fixed block size or a so called sliding block size, both for the shuffling in the encoder and for restoring the lines in the decoder. A fixed block size means here that in the encoder/decoder the whole section SM to be encrypted/already encrypted of the picture or field is processed at the same time, whereby it is obtained in one operation into the encrypted/original order. A sliding block size means that only a part of the section SM to be encrypted/already encrypted is processed at the same time. When the first section has been processed, then the second section will be processed, and so on, until the whole section SM to be encrypted/already encrypted is processed. In the processing of subsequent sections it is possible to use lines from earlier sections.

## Claims

1. Method for encryption of a video picture, in which lines of a field or of a picture are shuffled in an encoder before transmission in order to encrypt the picture, so that in a section of the field or of the picture lines are shuffled within a predetermined encryption block (SM), whereas the rest forms a block (VM) of the field or of the picture which remains unchanged, **characterized** in that a transition block is arranged between the encryption block (SM) of the field or picture and the block (VM) of the field or picture, this transition block being formed by a first sub-block (N+1) of the block (VM) transmitted in original order after the interface following the encryption block (SM) to be transmitted in changed order, so that the first sub-block (N+1) of the block (VM) transmitted in original order after the interface following the encryption block (SM) transmitted in changed order is transferred to be the last sub-block (N+1) of the block (VM) transmitted in original order of the interface preceding the encryption block (SM) transmitted in changed order.

2. Method according to claim 1, **characterized** in that the encryption block (SM) is delayed by one field period, and that the block (VM) transmitted in original order is delayed by two field periods.

3. Method according to claim 1, **characterized** in that in reception of the encrypted video picture the decoder decrypts the encrypted field or picture, whereby a transition block is arranged between the block (SM) of the field or picture to be encrypted and the rest (VM) of the field or picture, the transition block being formed from the last sub-block (N+1) of the block (VM) transmitted in original order of the interface preceding the encrypted block (SM) transmitted in a changed order, whereby the last block (N+1) of the block (VM) transmitted in original order of the interface preceding the encrypted block (SM) transmitted in a changed order is transferred to be the first sub-block (N+1) of the block (VM) transmitted in original order of the interface preceding the encrypted block (SM) transmitted in a changed order.

4. Method according to claim 3, **characterized** in that the sub-block (N+1) comprises at least one line.

5. Method according to claim 3, **characterized** in that the block (SM) transmitted in changed order is delayed by one field period in the decoder.

6. Encoder of an encryption system for a video picture, in which lines of a field or of a picture are shuffled before transmission, the encoder comprising a memory to store a video signal for carrying out the line shuffling, and shuffling control means (5, 6), **characterized** in that said memory comprises an encryption memory (3) to store a predetermined encrypted block (SM) and a vertical memory (2) to store the rest (VM) of the picture or of the field, and said shuffling control mean (5,6) comprise means (5) for generating the encryption memory (3) addresses, and memory control means (6) which controls said encryption memory (3) and said control memory (2).

7. Encoder according to claim 6, characterized in that it comprises means (4) connected to the vertical memory (2) to delay the vertical blanking period and the picture contents.

8. Decoder of an encryption system for a video picture, in which the picture is encrypted so that lines of a field or of a picture are shuffled before transmission, the decoder comprising an encryption memory (9) to store a video signal in order to decrypt the shuffling of the lines, and decryption control means (10, 11), **characterized** in that said memory (9) stores that section (SM) of a field or of a picture, in which the lines are shuffled and the decoder comprise means (10) generating the encryption memory adresses and memory control means (11) connected to the encryption memory (9).

9. Encoder according to claim 6 and decoder according to claim 8, characterized in that they comprise a video signal receiving A/D converter (1, 8) to digitize the video signal before it is stored in the memory, and a D/A converter (7, 12) to convert the video signal and to output it in analog form.

## Patentansprüche

1. Verfahren zur Verschlüsselung eines Videobildes, bei dem Zeilen eines Feldes oder eines Bildes in einem Codierer vor dem Senden verwürfelt werden, um das Bild zu verschlüsseln, so daß in einem Abschnitt des Feldes oder des Bildes Zeilen innerhalb eines vorbestimmten Verschlüsselungsblockes (SM) verwürfelt werden, während der Rest einen Block (VM) des Feldes oder des Bildes bildet, der unverändert bleibt, dadurch gekennzeichnet, daß ein Übergangsblock zwischen dem Verschlüsselungsblock (SM) des Feldes oder Bildes und dem Block (VM) des Feldes oder Bildes angeordnet ist, wobei dieser Übergangsblock durch einen ersten Subblock (N+1) des Blockes (VM) gebildet wird, der in der ursprünglichen Reihenfolge nach der Schnittstelle gesendet wird, die auf den Verschlüsselungsblock (SM) folgt, der in geänderter Reihenfolge zu senden ist, so daß der erste Subblock (N+1) des Blockes (VM), der in ursprünglicher Reihenfolge nach der Schnittstelle gesendet wird, die auf den in geänderter Reihenfolge gesendeten Verschlüsselungsblock (SM) folgt, als der letzte Subblock (N+1) des Blockes (VM) übertragen wird, der in der ursprünglichen Reihenfolge der Schnittstelle vor dem in geänderter Reihenfolge gesendeten Verschlüsselungsblock (SM) gesendet wird.

2. Verfahren nach Anspruch 1, dadurch gekennzeichnet, daß der Verschlüsselungsblock (SM) um eine Feldperiode verzögert wird und daß der in der ursprünglichen Reihenfolge gesendete Block (VM) um zwei Feldperioden verzögert wird.

3. Verfahren nach Anspruch 1, dadurch gekennzeichnet, daß beim Empfangen des verschlüsselten Videobildes der Decoder das verschlüsselte Feld oder Bild entschlüsselt, so daß ein Übergangsblock zwischen dem Block (SM) des zu verschlüsselnden Feldes oder Bildes und dem Rest (VM) des Feldes oder Bildes angeordnet ist, wobei der Übergangsblock aus dem letzten Subblock (N+1) des in ursprünglicher Reihenfolge der Schnittstelle vor dem in einer geänderten Reihenfolge gesendeten verschlüsselten Blockes (SM) gebildet wird, so daß der letzte Block (N+1) des Blockes (VM), der in ursprünglicher Reihenfolge der Schnittstelle vor dem in einer geänderten Reihenfolge gesendeten verschlüsselten Block (SM) gesendet wurde, als erster Subblock (N+1) des Blockes (VM) übertragen wird, der in ursprünglicher Reihenfolge der Schnittstelle vor dem in einer geänderten Reihenfolge gesendeten verschlüsselten Block (SM) gesendet wurde.

4. Verfahren nach Anspruch 3, dadurch gekennzeichnet, daß der Subblock (N+1) wenigstens eine Zeile umfaßt.

5. Verfahren nach Anspruch 3, dadurch gekennzeichnet, daß der in geänderter Reihenfolge gesendete Block (SM) um eine Feldperiode in dem Decoder verzögert wird.

6. Codierer eines Verschlüsselungssystems für ein Videobild, bei dem Zeilen eines Feldes oder eines Bildes vor dem Senden verwürfelt werden, wobei der Codierer einen Speicher zum Speichern eines Videosignals zur Durchführung der Zeilenverwürfelung und ein Verwurfelungssteuermittel (5, 6) aufweist, dadurch gekennzeichnet, daß der genannte Speicher einen verschlüsselungsspeicher (3) zum Speichern eines vorbestimmten verschlüsselten Blockes (SM) und einen vertikalen Speicher (2) zum Speichern des Restes (VM) des Bildes oder des Feldes umfaßt, und wobei das genannte Verwürfelungssteuermittel (5, 6) ein Mittel (5) zum Generieren der Adressen des Verschlüsselungsspeichers (3) und ein Speichersteuermittel (6) aufweist, das den genannten Verschlüsselungsspeicher (3) von dem genannten Steuerspeicher (2) steuert.

7. Codierer nach Anspruch 6, dadurch gekennzeichnet, daß er ein mit dem vertikalen Speicher (2) verbundenes Mittel (4) zum Verzögern der vertikalen Austastperiode und des Bildinhalts umfaßt.

8. Decoder eines Verschlüsselungssystems für ein Videobild, bei dem das Bild so verschlüsselt wird, daß Zeilen eines Feldes oder eines Bildes vor dem Senden verwürfelt werden, wobei der Decoder einen Verschlüsselungsspeicher (9) zum Speichern eines Videosignals, um das Verwürfeln der Zeilen zu entschlüsseln, und ein Entschlüsselungssteuermittel (10, 11) aufweist, dadurch gekennzeichnet, daß der genannte Speicher (9) denjenigen Abschnitt (SM) eines Feldes oder eines Bildes speichert, in dem die Zeilen verwürfelt sind, und der Decoder ein Mittel (10) zum Generieren der Verschlüsselungsspeicheradressen und ein mit dem Verschlüsselungsspeicher (9) verbundenes Speichersteuerungsmittel (11) umfaßt.

9. Codierer nach Anspruch 6 und Decoder nach Anspruch 8, dadurch gekennzeichnet, daß sie einen A/D-Wandler (1, 8) zum Empfangen des Videosignals, die das Videosignal digitalisieren, bevor es in dem Speicher gespeichert wird, und einen D/A-Wandler (7, 12) umfassen, um das Videosignal zu konvertieren und es in analoger Form auszugeben.

## Revendications

1. Procédé pour chiffrer une image vidéo, dans lequel les lignes d'un champ ou d'une image sont brouillées dans un codeur avant émission afin de chiffrer l'image, de telle sorte que dans une section du champ ou de l'image, des lignes sont brouillées dans un bloc de chiffrage prédéterminé (SM), tandis que le reste forme un bloc (VM) du champ ou de l'image qui reste inchangé, caractérisé en ce qu'un bloc de transition est agencé entre le bloc de chiffrage (SM) du champ ou de l'image et le bloc (VM) du champ ou de l'image, ce bloc de transition étant formé par un premier sous-bloc (N+1) du bloc (VM) émis dans l'ordre initial après l'interface suivant le bloc de chiffrage (SM) à émettre dans l'ordre modifié, de telle sorte que le premier sous-bloc (N+1) du bloc (VM) émis dans l'ordre initial après que l'interface suivant le bloc de chiffrage (SM) émis dans l'ordre modifié est transféré pour être le dernier sous-bloc (N+1) du bloc (VM) émis dans l'ordre initial de l'interface précédant le bloc de chiffrage (SM) émis dans l'ordre modifié.

2. Procédé selon la revendication 1, caractérisé en ce que le bloc de chiffrage (SM) est retardé d'une période de champ, et en ce que le bloc (VM) émis dans l'ordre initial est retardé de deux périodes de champ.

3. Procédé selon la revendication 1, caractérisé en ce qu'à la réception de l'image vidéo chiffrée, le décodeur déchiffre le champ ou l'image chiffré(e), un bloc de transition étant ainsi agencé entre le bloc (SM) du champ ou de l'image à chiffrer et le reste (VM) du champ ou de l'image, le bloc de transition étant formé à partir du dernier sous-bloc (N+1) du bloc (VM) émis dans l'ordre initial de l'interface précédant le bloc chiffré (SM) émis dans un ordre modifié, le dernier bloc (N+1) du bloc (VM) émis dans l'ordre initial de l'interface précédant le bloc chiffré (SM) émis dans un ordre modifié est transféré pour être le premier sous-bloc (N+1) du bloc (VM) émis dans l'ordre initial de l'interface précédant le bloc chiffré (SM) émis dans un ordre modifié.

4. Procédé selon la revendication 3, caractérisé en ce que le sous-bloc (N+1) comprend au moins une ligne.

5. Procédé selon la revendication 3, caractérisé en ce que le bloc (SM) émis dans l'ordre modifié est retardé par une période de champ dans le décodeur.

6. Codeur d'un système de chiffrage pour une image vidéo, dans lequel les lignes d'un champ ou d'une image sont brouillées avant émission, le codeur comprenant une mémoire pour stocker un signal vidéo pour réaliser le brouillage des lignes, et des moyens de commande de brouillage (5, 6), caractérisé en ce que ladite mémoire comprend une mémoire de chiffrage (3) pour stocker un bloc chiffré prédéterminé (SM) et une mémoire verticale (2) pour stocker le reste (VM) de l'image ou du champ, et lesdits moyens de commande de brouillage (5, 6) comprennent des moyens (5) pour générer les adresses de mémoire de chiffrage (3), et des moyens de commande de mémoire (6) qui commandent ladite mémoire de chiffrage (3) et ladite mémoire de commande (2).

7. Codeur selon la revendication 6, caractérisé en ce qu'il comprend des moyens (4) reliés à la mémoire verticale (2) pour retarder la période de suppression du faisceau et le contenu de l'image.

8. Décodeur d'un un système de chiffrage pour une image vidéo, dans lequel l'image est chiffrée de telle sorte que les lignes d'un champ ou d'une image sont brouillées avant émission, le décodeur comprenant une mémoire de chiffrage (9) pour stocker un signal vidéo afin de déchiffrer le brouillage des lignes, et des moyens de commande de déchiffrage (10, 11), caractérisé en ce que ladite mémoire (9) stocke la section (SM) d'un champ ou d'une image, dans lequel les lignes sont brouillées et le décodeur comprend des moyens (10) générant les adresses de mémoire de chiffrage et des moyens de commande de mémoire (11) reliés à la mémoire de chiffrage (9).

9. Codeur selon la revendication 6 et décodeur selon la revendication 8, caractérisés en ce qu'ils comprennent un convertisseur A/N (1, 8) recevant le signal vidéo pour numériser le signal vidéo avant qu'il soit stocké dans la mémoire, et un convertisseur N/A (7, 12) pour convertir le signal vidéo et pour le délivrer sous forme analogique.
